# EUROPEAN PATENT SPECIFICATION

(11) **EP 2 417 737 B1**
(45) Date of publication and mention of the grant of the patent: **24.10.2018**
(21) Application number: 09843146.3
(22) Date of filing: 07.04.2009
(51) Int. Cl.: H04L 12/861, H04L 12/863, G06F 9/54

(54) **TRANSMIT-SIDE SCALER AND METHOD FOR PROCESSING OUTGOING INFORMATION PACKETS USING THREAD-BASED QUEUES**
SENDESEITIGER SKALIERER UND VERFAHREN ZUM VERARBEITEN VON ABGEHENDEN INFORMATIONSPAKETEN UNTER VERWENDUNG VON WARTESCHLANGEN AUF THREAD-BASIS
PROCESSEUR DE MISE A L'ÉCHELLE CÔTÉ TRANSMISSION ET PROCÉDÉ POUR LE TRAITEMENT DE PAQUETS D'INFORMATION SORTANTS METTANT EN OEUVRE DES FILES D'ATTENTE À BASE DE FIL

(43) Date of publication of application: 15.02.2012
(73) Proprietor: Cisco Technology, Inc., San Jose, CA 95134-1706 (US)
(72) Inventor: MUKHERJEE, Shrijeet, Fremont CA 94536 (US)
(74) Representative: Kazi, Ilya
(86) International application number: PCT/US2009/039786
(87) International publication number: WO 2010/117359

(56) References cited:
- US-A1- 2001 043 610
- US-A1- 2005 100 000
- US-A1- 2007 230 489
- US-A1- 2008 253 387

## Description

### TECHNICAL FIELD

Some embodiments pertain to transmit-side processing in connection-oriented systems and virtualization platforms. Some embodiments pertain to network protocol processing, such as TCP/IP processing, prior to transmission.

### BACKGROUND

In connection oriented systems, the scheduling and queuing of outgoing network packets presents several challenges. For example, outgoing packets of one flow may be held up by outgoing packets of another flow. Unlike receive-side processing, in transmit side processing the flow associated with an outgoing network packet is not readily identifiable by the packet. Operating systems typically insert a packet header that identifies the flow information just before network transmission. To retain the order of the packets of a flow prior to network transmission, some operating systems multiplex outgoing network packets of several flows together into a single output queue. As a result, slower flows may slow unrelated faster flows.

US 2007/230489 discloses a method of generating one or more packets of data, the one or more packets of data being associated with a connection; and associating the one or more packets with one of a plurality of transmit queues based, at least in part, on the connection associated with the one or more packets.

Thus, there are general needs for processing outgoing information packets that improve throughput in server systems, and maintain packet order in outgoing flows.

### OVERVIEW

The invention is defined in the appended claims. Some example embodiments are directed to a transmit-side scaler The transmit-side scaler may include a token area memory to store a plurality of token areas. Each token area may be associated with a user application. The transmit-side scaler may also include a transmit queue memory to provide a plurality of transmit queues, and memory to store an active threads table that associates process identifiers (IDs) of active threads with one of the transmit queues. The transmit-side scaler may include processing circuitry configured to identify one of the transmit queues for an outgoing information packet by comparing a process ID stored in the token area associated with the application generating the packet with a process ID of the user application that generated the outgoing information packet.

Some other example embodiments are directed to methods for processing outgoing information packets. The methods include identifying a transmit queue for an outgoing information packet from a token area associated with the user application providing the outgoing information packet when a process ID stored in the token area matches a process ID of the user application. The transmit queue for the outgoing information packet may be identified from an active threads table when the process ID stored in the token area does not match the process ID of the user application. A new transmit queue may be generated when the process ID of the user application is not identified in the active threads table.

### BRIEF DESCRIPTION OF THE DRAWINGS

FIG. 1 is a block diagram of a transmit-side scaler in accordance with some embodiments;
FIG. 2A illustrates the operations related to receipt of an outgoing information packet in accordance with some embodiments;
FIG. 2B illustrates the structure of an active threads table in accordance with some embodiments; and
FIG. 3 is a flow chart of an outgoing information packet processing procedure in accordance with some embodiments.

### DESCRIPTION OF EXAMPLE EMBODIMENTS

The following description and the drawings sufficiently illustrate specific embodiments to enable those skilled in the art to practice them. Other embodiments may incorporate structural, logical, electrical, process, and other changes. Examples merely typify possible variations. Individual components and functions are optional unless explicitly required, and the sequence of operations may vary. Portions and features of some embodiments may be included in, or substituted for those of other embodiments.

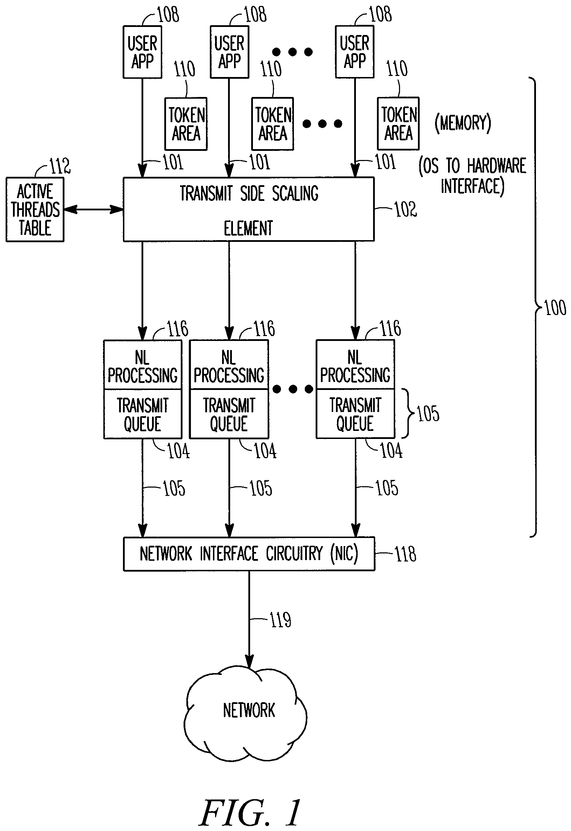

FIG. 1 is a block diagram of a transmit-side scaler 100 in accordance with some embodiments. Transmit-side scaler 100 performs transmit-side processing which refers to the processing of outgoing information packets 101 received from user applications 108 for subsequent transmission as network packets over a network connection 119. Transmit-side scaler 100 may be used to process outgoing information packets 101 received from user applications 108 for transmission by network interface circuitry 118 over network connection 119 to an external network. Transmit-side scaler 100 may include a plurality of transmit queues 104 which may be established for each active processing thread. Transmit-side scaler 100 may also include network layer (NL) processing elements 116, which may be associated with each transmit queue 104. Network layer processing elements 116 which generate network-layer packets from information packets 101. Transmit-side scaler 100 may also include token areas 110 which may be associated with each user application 108. Transmit-side scaler 100 may also include active threads table 112 to associate process identifiers (IDs) of active processing threads of user applications 108 with particular transmit queues 104. Transmit-side scaler 100 may also include transmit-side scaling element 102 configured to process outgoing information packets 101 and perform various operations as described in more detail below.

Transmit queues 104, active threads table 112, and token areas 110 may comprise portions of memory. Transmit queues 104 may be stored in transmit-queue memories 105. Token areas 110 may be private areas of memory that are reserved on a per connection basis from a user-space socket. These private token areas 110 may be managed, created, and eliminated by the operating system. Token areas 110 may store a current process ID, and, as discussed in more detail below, may be updated when an application transmitting an outgoing information packet may have a different process ID than the process ID identified in the associated token area.

In accordance with some embodiments, one of the transmit queues 104 may be identified for an outgoing information packet 101 by comparing a process ID stored in the token area 110 associated with the user application 108 generating the packet with the process ID of the user application 108 that generated the outgoing information packet 101. In these embodiments, the proper transmit queue 104 may be obtained directly from the associated token area 110 when the process ID of the user application 108 generating the outgoing information packet matches the process ID stored in the associated token area 110. When the process ID of the user application 108 generating the outgoing information packet does not match the process ID stored in the associated token area (i.e., a miss), the proper transmit queue may not be identified in the associated token area 110 and therefore needs to be determined.

When the process ID stored in the token area 110 does not match the process ID of the user application 108 that generated the outgoing information packet 101, the token area 110 may be updated with a process ID stored in an active threads table 112. In this situation, the current process ID was not stored in the associated token area 110, and therefore the token area 110 may be updated with the current process ID found in the active threads table 112. The associated token area 110 may also be updated to identify the proper transmit queue 104 found in the active threads table.

A processing thread of a new flow may be identified when the process ID of the user application 108 that generated an outgoing information packet 101 does not match the process ID stored in the token area (i.e., resulting in a miss) and when the process ID of the user application 108 that generated the outgoing information packet 101 is not listed in the active threads table 112. Accordingly, transmit queues 104 may be established for each processing thread. This allows IP flows to be uniquely mapped to a transmit queue 104 and either the hardware or the operating system may schedule outgoing packets from multiple transmit queues for transmission. This is unlike conventional systems in which kernel scheduling is needed between multiple IP flows since there may be only one outgoing queue and multiple flows. These embodiments are discussed in more detail below.

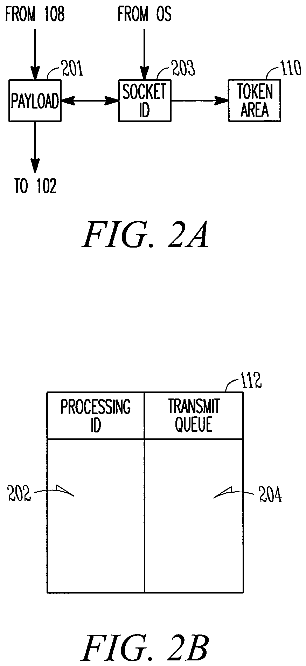

FIG. 2A illustrates the operations related to receipt of an outgoing information packet in accordance with some embodiments. Payload portion 201 of an outgoing information packet 101 (FIG. 1) may be received from one of user applications 108. The operating system may provide a socket ID 203 corresponding to payload portion 201. The socket ID may be used to locate the internet socket information (e.g., the local IP address, local port, remote port and remote IP address) as well as the task control block (TCB) stored in protective memory of the kernel stack allowing the corresponding process ID to be identified.

FIG. 2B illustrates the structure of an active threads table in accordance with some embodiments. Active threads table 112 comprises process IDs 202 and associated transmit queues 204. Each of associated transmit queues 204 may correspond to one of transmit queues 104 (FIG. 1).

Referring to FIGs. 1, 2A and 2B, in some example embodiments, outgoing information packets 101 may comprise application data received from user applications 108. An outgoing information packet 101 may be associated with a process ID which corresponds to a process running on one of a plurality of processing cores (not separately illustrated in FIG. 1). A user application 108 providing an outgoing information packet may be associated with a token area 110 identifying a process ID and one of the transmit queues 104. In these example embodiments, token areas 110 may comprise private areas in memory for storing token areas. Each processing core (e.g., a CPU) (not separate illustrated) may support more than one user application 108, and an operating system to hardware interface (not separately illustrated) may be provided between the processing cores and transmit side scaling element 102.

In response to receipt of an outgoing information packet 101, transmit side scaling element 102 may compare the process ID of the user application 108 that generated the outgoing information packet 101 with a process ID stored in the associated token area 110. When the process IDs match (i.e., a hit), an active thread has been identified. In this situation, the transmit queue 104 may be identified in the token area and the payload 210 of the outgoing information packet 101 may be sent to the identified transmit queue 104.

When the process IDs do not match (i.e., a miss), transmit side scaling element 102 may determine whether the outgoing information packet 101 is associated with a different processing thread of the same flow, or a processing thread of a new flow. Processing IDs of different processing threads of the same flow, for example, may be identified using active threads table 112. New transmit queues may be generated for processing threads of a new flow.

Network layer (NL) processing circuitry 116 may generate network layer packets (e.g., TCP/IP packets) prior to storing the processed packets in transmit queues 104. Network layer packets 105 from the transmit queues 104 may wait for subsequent processing by the operating system and may be provided to network interface circuitry 118 for transmission over network connection 119. Network interface circuitry 118, may, for example, comprise a network interface card (NIC).

In some example embodiments, network layer processing circuitry 116 may generate TCP/IP packets which may include added header information. In some example embodiments, separate network layer processing circuitry 116 may be associated with each of transmit queues 104 as illustrated.

Although the system illustrated in FIG. 1 may be almost any processing system including a computer system or a server system, in some example embodiments, the system may be a virtualization platform that includes a host system. The host system may include a virtual-machine manager which may help manage virtual machine migration (i.e., the live migration of a virtual machine between physical machines). In these example embodiments, any one or more of user applications 108 may be considered a virtual machine and accordingly the virtual-machine manager may manage the live migration of a running virtual machine between physical machines (i.e., from the host system to another host system). In some example embodiments, the virtual-machine manager may operate as a hypervisor. In some example embodiments, user applications 108 may be viewed as guest applications and may include an instance of a guest operating system. User applications 108 may also include unprivileged user-space applications, although the scope of the disclosure is not limited in this respect.

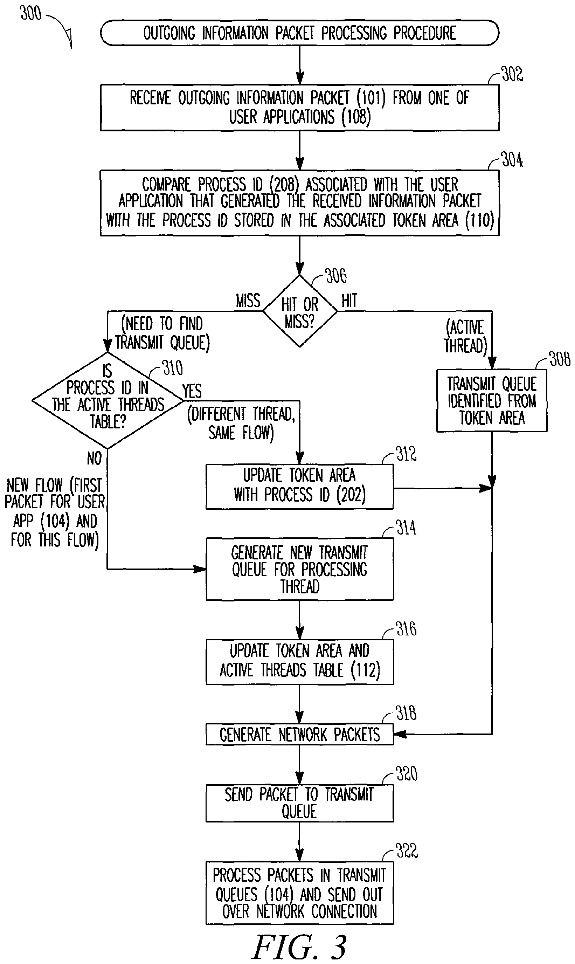

FIG. 3 is a flow chart of an outgoing information packet processing procedure in accordance with some embodiments. Outgoing information packet processing procedure 300 may be performed by transmit-side scaling element 102 (FIG. 1), although other combinations of hardware and software may be configured to perform procedure 300.

Referring to FIGs. 1 and 3 together, in procedure 300, outgoing information packets 101 are received from user applications 108, and the proper transmit queue 104 for the outgoing information packets 101 is either identified or created. The outgoing information packets 101 packets are converted to network layer (e.g., TCP/IP) packets and stored in the proper transmit queue 104 prior to being sent out over network connection 119 by the operating system.

In operation 302, an outgoing information packet 101 is received from one of user applications 108. As discussed above, the process ID associated with the outgoing information packet may identify a process running on one of the processing cores. The process ID associated with the information packet may be the process ID of the user application 108 generating the information packet. Furthermore, from the outgoing information packet 101, the associated token area 110 may be identified. In some embodiments, applications 108 may pass a data buffer (e.g., not the actual outgoing information packet 101) and a socket ID, although the scope of the embodiment is not limited in this respect.

In operation 304, the process ID associated with the outgoing information packet 101 is compared with a process ID stored in the associated token area 110.

Operation 306 determines whether or not the process IDs compared in operation 304 match. When process ID stored in the token area 110 matches the process ID of the user application 108 generating the outgoing information packet 101, operation 308 is performed in which the proper transmit queue 104 corresponding to the process ID is identified by the token area 110. When the process IDs do not match (i.e., a miss), operation 310 is performed to either determine the proper transmit queue or create a new transmit queue.

Operation 310 determines whether the process ID associated with the outgoing information packet 101 is listed in the active threads table 112. When the process ID associated with the outgoing information packet 101 is listed in the active threads table 112, the information packet is associated with a different thread of the same flow. Operation 312 accordingly updates the associated token area 110 with the process ID from the active threads table and may also associate the proper transmit queue 104 in the associated token area 110.

In operation 310, when the process ID associated with the outgoing information packet 101 is not listed in the active threads table 112, the outgoing information packet 101 may be the first packet for the user application 108 and/or may be associated with a new flow. In these situations, operation 314 generates a new transmit queue 104 for the processing thread corresponding the process ID.

In operation 316, the token area 110 associated with the user application 108 is updated with the process ID and to identify the new transmit queue 104 generated in operation 314. A new entry for the process ID and the new transmit queue 104 may also be added the active threads table 112.

In operation 318, the outgoing information packet may be converted to a network layer packet, such as a TCP/IP packet. Operation 318 may be performed by one of network layer processing elements 116 associated with a transmit queue 104, although the scope of the embodiment is not limited in this respect. In some alternate embodiments, a single network layer processing element may perform network layer packet conversion for all the transmit queues 104.

In operation 320, after conversion to a network layer packet in operation 318, the outgoing information packet is sent to the associated transmit queue 104.

In operation 322, the network layer packets in the transmit queues 104 may wait for subsequent processing by the operating system where they may be transferred by NIC 118 over network connection 119. The transmit queues may be serviced in a variety of orders that may, for example, be based on the quality-of-service (QoS) and/or latency requirements for the particular flow.

Although the individual operations of procedure 300 are illustrated and described as separate operations, one or more of the individual operations may be performed concurrently, and nothing requires that the operations be performed in the order illustrated.

Although the system illustrated in FIG. 1 is illustrated as having several separate functional elements, one or more of the functional elements may be combined and may be implemented by combinations of software-configured elements, such as processing elements including digital signal processors (DSPs), and/or other hardware elements. For example, some functional elements, including for example, transmit side scaling element 102, may comprise one or more microprocessors, DSPs, application specific integrated circuits (ASICs), and combinations of various hardware and logic circuitry for performing at least the functions described herein. In some embodiments, the functional elements of the system may refer to one or more processes operating on one or more processing elements.

Unless specifically stated otherwise, terms such as processing, computing, calculating, determining, displaying, or the like, may refer to an action and/or process of one or more processing or computing systems or similar devices that may manipulate and transform data represented as physical (e.g., electronic) quantities within a processing system's registers and memory into other data similarly represented as physical quantities within the processing system's registers or memories, or other such information storage, transmission or display devices. Furthermore, as used herein, a computing device includes one or more processing elements coupled with computer-readable memory that may be volatile or non-volatile memory or a combination thereof.

Some embodiments may be implemented in one or a combination of hardware, firmware and software. Embodiments may also be implemented as instructions stored on a computer-readable medium, which may be read and executed by at least one processor to perform the operations described herein. A computer-readable medium may include any mechanism for storing or transmitting information in a form readable by a machine (e.g., a computer). For example, a computer-readable medium may include read-only memory (ROM), random-access memory (RAM), magnetic disk storage media, optical storage media, flash-memory devices, and others.

## Claims

1. A method for processing outgoing information packets comprising:
receiving (302) an outgoing information packet (101) generated by a user application (108) having a process ID;
comparing (304) the process ID of the user application (108) with a process ID stored in a private memory area (110) reserved from a user-space socket and associated with the user application (108);
when (306) the process ID stored in the private memory area matches the process ID of the user application (108) identifying a transmit queue associated with the process ID stored in the private memory area and sending the outgoing packet (101) to the identified transmit queue;
when (306) the process ID stored in the private memory area does not match the process ID of the user application (108) determining whether the process ID of the user application (108) matches a Process ID in an active threads table that associates process IDs of active processing threads with one of a plurality of transmit queues (104);
when (310) the process ID of the user application (108) matches a Process ID in the active threads table (112), determining that the information packet (101) is associated with a different processing thread of a current flow and updating(312) the private memory area (110) associated with the process ID of the user application with the process ID stored in the active threads table (112) to be associated with the transmit queue in the private memory area; and
when (310) the process ID of the user application (108) does not match a Process ID in the active threads table (112), generating (314) a new transmit queue (104) for a processing thread associated with the process ID of the user application (108) that generated the outgoing information packet (101), updating (316) the private memory area (110) with the process ID of the user application (108) in association with the new transmit queue, and adding (316) a new entry to the active threads table (112) to associate the process ID of the user application (108) with the processing thread and the new transmit queue (104).

2. The method of claim 1, wherein the outgoing information packet comprises application data received from one of a plurality of user applications, and
wherein the process ID associated with one of the user applications corresponds to a process running on one of a plurality of processing cores, and
wherein a private memory area is associated with each user application.

3. The method of claim 1, when the process ID stored in the private memory area matches the process ID of the user application that generated the outgoing information packet, the method includes sending the outgoing information packet to the identified transmit queue.

4. The method of claim 1, further comprising:
generating (318) network layer packets prior to sending (320) the packets to the identified transmit queue,
wherein the network layer packets at the transmit queues wait for subsequent transmission over a network connection.

5. The method of claim 1, wherein the active threads table identifies one of a plurality of the transmit queues for each active processing thread.

6. A computer-readable medium that stores instructions for execution by one or more processors to process outgoing information packets, the instructions causing the one or more processors to perform a method according to any preceding claim.

7. A transmit-side scaler to process outgoing information packets, the transmit-side scaler comprising:
memory to store a plurality of private memory areas (110), each private memory area (110) reserved from a user-space socket and associated with a user application (108);
a transmit queue memory to provide a plurality of transmit queues (104);
memory to store an active threads table (112) that associates process IDs of active processing threads with one of the transmit queues (104); and
processing circuitry (102) arranged to perform a method according to any of claims 1 to 5.

## Patentansprüche

1. Verfahren zum Verarbeiten ausgehender Informationspakete, das Folgendes umfasst:
Empfangen (302) eines ausgehenden Informationspakets (101), das von einer Benutzeranwendung (108) erzeugt wurde, die eine Prozess-ID aufweist;
Vergleichen (304) der Prozess-ID der Benutzeranwendung (108) mit einer Prozess-ID, die in einem privaten Speicherbereich (110) gespeichert ist, der von einem User-Space-Socket reserviert und der Anwendung (108) zugeordnet ist;
wenn (306) die Prozess-ID, die in dem privaten Speicherbereich gespeichert ist, mit der Prozess-ID der Benutzeranwendung (108) übereinstimmt, Identifizieren einer Sendewarteschlange, die der Prozess-ID zugeordnet ist, die im privaten Speicherbereich gespeichert ist, und Senden des ausgehenden Pakets (101) an die identifizierte Sendewarteschlange;
wenn (306) die Prozess-ID, die in dem privaten Speicherbereich gespeichert ist, nicht mit der Prozess-ID der Benutzeranwendung (108) übereinstimmt, Bestimmen, ob die Prozess-ID der Benutzeranwendung (108) mit einer Prozess-ID in einer Tabelle aktiver Threads übereinstimmt, die Prozess-IDs von aktiven Verarbeitungs-Threads einer einer Vielzahl von Sendewarteschlangen (104) zugeordnet;
wenn (310) die Prozess-ID der Benutzeranwendung (108) mit einer Prozess-ID in der Tabelle aktiver Threads (112) übereinstimmt, Bestimmen, dass das Informationspaket (101) mit einem anderen Verarbeitungs-Thread eines Stromflusses verknüpft ist, und Aktualisieren (312) des privaten Speicherbereichs (110), der der Prozess-ID der Benutzeranwendung zugeordnet ist, wobei die Prozess-ID in der Tabelle aktiver Threads (112) gespeichert ist, um mit der Sendewarteschlange in dem privaten Speicherbereich verknüpft zu werden; und
wenn (310) die Prozess-ID der Benutzeranwendung (108) nicht mit einer Prozess-ID in der Tabelle aktiver Threads (112) übereinstimmt, Erzeugen (314) einer neuen Sendewarteschlange (104) für einen Verarbeitungs-Thread, der der Prozess-ID der Benutzeranwendung (108) zugeordnet ist, die das abgehende Informationspaket (101) erzeugt hat, Aktualisieren (316) des privaten Speicherbereichs (110) mit der Prozess-ID der Benutzeranwendung (108) in Verbindung mit der neuen Sendewarteschlange, und Hinzufügen (316) eines neuen Eintrags zu der Tabelle aktiver Threads (112), um die Prozess-ID der Benutzeranwendung (108) dem Verarbeitungs-Thread und der neuen Sendewarteschlange (104) zuzuordnen.

2. Verfahren nach Anspruch 1, wobei das ausgehende Informationspaket Anwendungsdaten umfasst, die von einer einer Vielzahl von Benutzeranwendungen empfangen werden, und
wobei die Prozess-ID, die einer der Benutzeranwendungen zugeordnet ist, einem Prozess entspricht, der auf einem einer Vielzahl von Verarbeitungskernen ausgeführt wird, und
wobei jeder Benutzeranwendung ein privater Speicherbereich zugeordnet ist.

3. Verfahren nach Anspruch 1, wobei, wenn die Prozess-ID, die in dem privaten Speicherbereich gespeichert ist, mit der Prozess-ID der Benutzeranwendung übereinstimmt, die das ausgehende Informationspaket erzeugt hat, das Verfahren das Senden des ausgehenden Informationspakets an die identifizierte Sendewarteschlange umfasst.

4. Verfahren nach Anspruch 1, das ferner Folgendes umfasst:
Erzeugen (318) von Netzwerkschichtpaketen vor dem Senden (320) der Pakete an die identifizierte Sendewarteschlange,
wobei die Pakete der Netzwerkschicht in den Sendewarteschlangen auf eine nachfolgende Übertragung über eine Netzwerkverbindung warten.

5. Verfahren nach Anspruch 1, wobei die Tabelle der aktiven Threads eine aus einer Vielzahl der Sendewarteschlangen für jeden aktiven Verarbeitungs-Thread identifiziert.

6. Computerlesbares Medium, das Anweisungen zur Ausführung durch einen oder mehrere Prozessoren speichert, um ausgehende Informationspakete zu verarbeiten, wobei die Anweisungen bewirken, dass der eine oder die mehreren Prozessoren ein Verfahren nach einem der vorhergehenden Ansprüche ausführen.

7. Sendeseitiger Skalierer zum Verarbeiten ausgehender Informationspakete, wobei der sendeseitige Skalierer Folgendes umfasst:
einen Speicher zum Speichern einer Vielzahl von privaten Speicherbereichen (110), wobei jeder private Speicherbereich (110) von einem User-Space-Socket reserviert ist und einer Benutzeranwendung (108) zugeordnet ist;
einen Sendewarteschlangenspeicher zum Bereitstellen einer Vielzahl von Sendewarteschlangen (104);
einen Speicher zum Speichern einer Tabelle aktiver Threads (112), die Prozess-IDs von aktiven Verarbeitungs-Threads einer der Sendewarteschlangen (104) zuordnet; und
eine Verarbeitungsschaltung (102), die zum Durchführen eines Verfahrens nach einem der Ansprüche 1 bis 5 ausgelegt ist.

## Revendications

1. Procédé de traitement de paquets d'informations sortants comprenant de :
recevoir (302) un paquet d'informations sortant (101) généré par une application utilisateur (108) ayant un identificateur de processus ;
comparer (304) l'identificateur de processus de l'application utilisateur (108) à un identificateur de processus stocké dans une zone de mémoire privée (110) réservée à partir d'un point de connexion d'espace utilisateur et associée à l'application utilisateur (108) ;
lorsque (306) l'identificateur de processus stocké dans la zone de mémoire privée correspond à l'identificateur de processus de l'application utilisateur (108), identifier une file d'attente de transmission associée à l'identificateur de processus stocké dans la zone de mémoire privée et envoyer le paquet sortant (101) à file d'attente de transmission identifiée ;
lorsque (306) l'identificateur de processus stocké dans la zone de mémoire privée ne correspond pas à l'identificateur de processus de l'application utilisateur (108), déterminer si l'identificateur de processus de l'application utilisateur (108) correspond à un identificateur de processus dans une table de fils actifs qui associe des identificateur de processus de fils de traitement actifs avec l'une d'une pluralité de files d'attente de transmission (104) ;
lorsque (310) l'identificateur de processus de l'application utilisateur (108) correspond à un identificateur de processus dans la table de fils actifs (112), déterminer que le paquet d'informations (101) est associé à un fil de traitement différent d'un flux actuel et mettre à jour (312) la zone de mémoire privée (110) associée à l'identificateur de processus de l'application utilisateur avec l'identificateur de processus stocké dans la table de fils actifs (112) pour être associé à la file d'attente de transmission dans la zone de mémoire privée ; et
lorsque (310) l'identificateur de processus de l'application utilisateur (108) ne correspond pas à un identificateur de processus dans la table de fils actifs (112), générer (314) une nouvelle file d'attente de transmission (104) pour un fil de traitement associé à l'identificateur de processus de l'application utilisateur (108) qui a généré le paquet d'informations sortant (101), mettre à jour (316) la zone de mémoire privée (110) avec l'identificateur de processus de l'application utilisateur (108) en association avec la nouvelle file d'attente de transmission, et ajouter (316) une nouvelle entrée dans la table de fils actifs (112) pour associer l'identificateur de processus de l'application utilisateur (108) au fil de traitement et à la nouvelle file d'attente de transmission (104) .

2. Procédé selon la revendication 1, dans lequel le paquet d'informations sortant comprend des données d'application reçues à partir de l'une d'une pluralité d'applications utilisateurs, et
dans lequel l'identificateur de processus associé à l'une des applications utilisateurs correspond à un processus s'exécutant sur l'un d'une pluralité de coeurs de traitement, et
dans lequel une zone de mémoire privée est associée à chaque application utilisateur.

3. Procédé selon la revendication 1, lorsque l'identificateur de processus stocké dans la zone de mémoire privée correspond à l'identificateur de processus de l'application utilisateur qui a généré le paquet d'informations sortant, le procédé comprend d'envoyer le paquet d'informations sortant à la file d'attente de transmission identifiée.

4. Procédé selon la revendication 1, comprenant en outre de :
générer (318) des paquets de couche réseau avant d'envoyer (320) les paquets à la file d'attente de transmission identifiée,
dans lequel les paquets de couche réseau au niveau des files d'attente de transmission attendent une transmission ultérieure sur une connexion réseau.

5. Procédé selon la revendication 1, dans lequel la table de fils actifs identifie l'une d'une pluralité de files d'attente de transmission pour chaque fil de traitement actif.

6. Support lisible par ordinateur qui stocke des instructions d'exécution par un ou plusieurs processeurs, pour traiter des paquets d'informations de sortie, les instructions amenant les un ou plusieurs processeurs à exécuter un procédé selon l'une quelconque des revendications précédentes.

7. Échelonneur côté transmission pour traiter des paquets d'informations sortants, l'échelonneur côté transmission comprenant :
une mémoire pour stocker une pluralité de zones de mémoire privées (110), chaque zone de mémoire privée (110) étant réservée à partir d'un point de connexion d'espace utilisateur et associée à une application utilisateur (108) ;
une mémoire de files d'attente de transmission pour fournir une pluralité de files d'attente de transmission (104) ;
une mémoire pour stocker une table de fils actifs (112) qui associe des identificateurs de processus de fils de traitement actifs à l'une des files d'attente de transmission (104) ; et
circuit de traitement (102) agencé pour exécuter un procédé selon l'une quelconque des revendications 1 à 5.
